# EUROPÄISCHE PATENTSCHRIFT

(11) **EP 1 674 741 B1**
(45) Veröffentlichungstag und Bekanntmachung des Hinweises auf die Patenterteilung: **13.08.2008**
(21) Anmeldenummer: 05027517.1
(22) Anmeldetag: 15.12.2005
(51) Int. Cl.: F16B 37/06

(54) **Ein durch Nieten an ein Blechteil anbringbares Element sowie Zusammenbauteil und Verfahren zur Erzeugung des Zusammenbauteils**
Element mountable in a piece of sheet metal by means of riveting, assembly and method for the manufacture of the assembly
Elément à montage par rivetage dans une pièce en tôle, procédé de montage et ensemble ainsi formé

(30) Priorität: 23.12.2004 DE 102004062391
(43) Veröffentlichungstag der Anmeldung: 28.06.2006
(73) Patentinhaber: PROFIL-Verbindungstechnik GmbH & Co. KG, 61381 Friedrichsdorf (DE)
(72) Erfinder: Babej, Jiri, 35423 Lich (DE); Humpert, Richard, Dr., 61191 Rosbach v.d.H. (DE); Vieth, Michael, 61118 Bad Vilbel (DE)
(74) Vertreter: Manitz, Finsterwald & Partner GbR

(56) Entgegenhaltungen:
- EP-A- 0 539 793
- WO-A-02/077468
- DE-A1- 10 249 030

## Beschreibung

Die vorliegende Erfindung betrifft ein durch Nieten an ein Blechteil anbringbares Element, insbesondere ein Element in Form eines Zentrierbolzens, mit einem Schafteil und einem Kopfteil, wobei der Kopfteil auf seiner dem Blechteil zugewandten Seite eine zumindest in etwa ringförmige Vertiefung aufweist, die radial innerhalb einer ringförmigen Auflagefläche angeordnet ist und auf der radial äußeren Seite über eine zumindest in etwa konusförmige Wand in diese ringförmige Auflagefläche übergeht, wobei der Schaftteil von einem ringförmigen Nietabschnitt umgeben ist. Ferner betrifft die Erfindung ein Zusammenbauteil bestehend aus einem Blechteil, an dem das Element angebracht ist sowie ein Verfahren zur Anbringung des Elements an ein Blechteil.

Ein Element bzw. ein Zusammenbauteil sowie ein Verfahren der eingangs genannten Art ist aus den Fig. 8 und 9 der EP-A-0 539 793 bekannt. Bei dem dort beschriebenen Verfahren wird das Blechteil so ausgelegt, dass es im Bereich der Anbringung eine konusförmige Erhebung aufweist, wobei der mit Gewinde versehene Schaftteil des Bolzens sowie der ringförmige Nietabschnitt durch eine mittlere Öffnung der konusförmigen Erhebung von der erhobenen Seite kommend eingeführt wird, beim Nietvorgang der obere Bereich der konusförmigen Erhebung flach gepresst wird und der Nietbördel innerhalb einer Ringvertiefung auf der Unterseite des Blechteils, d.h. auf der dem Kopfteil des Bolzenelements abgewandten Seite des Blechteils, zu liegen kommt, die auch nach der teilweisen Flachpressung der konusförmigen Erhebung noch vorhanden ist.

Bei der dargestellten Ausführungsform sind mehrere in Umfangsrichtung gleichmäßig verteilte Verdrehsicherungsnasen vorhanden, die im Bereich des Übergangs der Ringvertiefung des Kopfteils in den ringförmigen Nietabschnitt vorliegen und in Seitenansicht eine dreieckige Form aufweisen, wobei sich die Verdrehsicherungsnasen im radialen Bereich nur über einen Teil der Breite der Ringvertiefung erstrecken.

Bolzenelemente dieser Art sind aber in der Praxis nicht eingesetzt worden. Ein Grund dafür liegt darin, dass die Verdrehsicherungsnasen einerseits der gewünschten Umformung des Blechteils eher hinderlich sind und andererseits den ringförmigen Nietabschnitt versteifen, wodurch sich die Umbördelung des Nietabschnitts als schwierig gestaltet. Ferner kann eine solche Konstruktion zu unerwünschten Blechverformungen führen. Bei dieser Art von Element drückt die Matrize, die für die Ausbildung des Nietbördels und die Umformung des Blechteils zuständig ist auf das Nietbördel und das Nietbördel drückt auf das Blechteil. Daher muss der sich ausbildende Nietbördel das Blechteil gegen die Verdrehsicherungsnasen drücken und die Verdrehsicherungsnasen in das Blechmaterial einpressen. Dies gestaltet sich in der Praxis als schwierig und es kann dazu kommen, dass das Blechmaterial an den Verdrehsicherungsnasen hängen bleibt wodurch die Ausbildung des Nietbördels fehlschlägt und der Nietabschnitt sich verformt und quasi radial in das Blechmaterial eingedrückt wird.

In der Technik ist eine Reihe von Anwendungen bekannt, bei denen ein durch Nieten an ein Blechteil angebrachtes Element als Zentrierelement dienen soll. Dabei weist das Element einen Schaftteilbereich auf, der relativ eng innerhalb eines Loches eines weiteren Bauteils passt, das an dem mit dem Blechteil vernieteten Element angebracht ist und gegenüber dem Blechteil genau positioniert werden soll. Dabei kann das Zentierelement eine reine Zentrierfunktion aufweisen, wobei die Anschraubung des weiteren Bauteils an das Blechteil mittels anderer Elemente vorgenommen wird, oder das Zentrierelement zugleich mit einem Gewinde versehen werden kann, das der Befestigung des Bauteils am Blechteil dient. Das Element hat dann nicht nur eine Zentrierfunktion, sondern auch eine Befestigungsfunktion.

Solche Zentrierelemente bzw. Zentrier- und Befestigungselemente wurden bisher von der Fa. Profil Verbindungstechnik GmbH & Co. KG in Form von so genannten SBF-Bolzen realisiert, die beispielsweise im deutschen Patent 3447006.9 beschrieben sind. Bei einem SBF-Bolzenelement wird das dem Schaftteil abgewandte Ende des Kopfteils für eine Nietverbindung mit dem Bauteil ausgelegt.

Obwohl sich solche Zentrierelemente, gegebenenfalls mit Befestigungsfunktion, in der Praxis bewährt haben, erfordert die Anbringung an das Blechteil im Bereich des Kopfteils des Elements eine relativ große Umformung des Blechteils und des Kopfteils. Dies führt dazu, dass bei Elementen mit einem Schaftteildurchmesser von 12 mm oder mehr relativ große Umformkräfte erforderlich sind, um die erforderliche Nietverbindung mit dem Blechteil herbeizuführen. Dies ist insbesondere dann problematisch, wenn das Blechteil eine erhebliche Dicke aufweist, was bei der Verwendung von Zentrierelementen mit größerem Schaftteildurchmesser häufig der Fall ist.

Auch bei anderen Befestigungselementen, die zu Zentrierzwecken verwendet werden können, entsteht eine ähnliche Problematik.

Ein weiteres Element, das als Zentrierelement verwendet werden kann, ist in der WO 02/077468 beschrieben. Es handelt sich dort um ein Funktionselement mit einem eine ringförmige Auflagefläche aufweisenden Kopfteil und einem rohrförmigen auf der Seite der Auflagefläche des Kopfteils vorgesehenen, vom Kopfteil weg erstreckenden Nietabschnitt, wobei ein rohrförmiger Führungsabschnitt konzentrisch zum rohrförmigen Nietabschnitt und radial innerhalb diesem angeordnet ist, zwischen dem Führungsabschnitt und dem Nietabschnitt ein Ringspalt vorgesehen ist und der Führungsabschnitt über das freie Ende des Nietabschnitts hinausragt.

Das freie Ende der Wandung des rohrförmigen Nietabschnitts ist in einer axialen Schnittebene gesehen sowohl auf der radial äußeren Seite als auch auf der radial inneren Seite gerundet und weist beispielsweise eine halbkreisförmige oder pfeilspitzartige Form auf, die der Ausbildung des Nietbördels dienlich ist. Der Führungsabschnitt ist als Stanzabschnitt gebildet und weist an seinem der Auflagefläche abgewandten Stirnende eine ringförmige Schneidkante auf, damit das Element selbststanzend in ein Blechteil eingebracht werden kann. Das Element ist als Mutterelement ausgebildet, was die selbststanzende Funktion erst ermöglicht. Bei diesem Element ist aber in der ringförmigen Auflagefläche keine Ringvertiefung vorgesehen und die Verdrehsicherungsnasen haben die Form von sich in radialer Richtung erstreckenden Erhebungen bzw. Rippen, die an der ringförmigen Auflagefläche ausgebildet sind.

Aufgabe der vorliegenden Erfindung ist es, ein Element der eingangs genannten Art vorzusehen, das sowohl eine reine Zentrierfunktion als auch eine Zentrier- und Befestigungsfunktion aufweisen kann, wobei zur Anbringung an das Blechteil Kräfte erforderlich sind, die auch bei Schaftteilen von 12 mm Durchmesser und größer in akzeptablen Grenzen bleiben, wobei eine unerwünschte Verformung des Blechteils nicht zu befürchten ist und bei dem das eine Element mit Blechteilen in verschiedenen Dicken verwendet werden kann, wobei ein ausgezeichneter Verdrehwiderstand erzielt wird.

Zur Lösung dieser Aufgabe wird ein Element der eingangs genannten Art vorgesehen, das sich dadurch auszeichnet, dass die Ringvertiefung auf der radial inneren Seite in einen Zylinderabschnitt des Kopfteils übergeht, der wiederum in den Schaftteil und den Nietabschnitt übergeht, und dass mindestens eine lokale Vertiefung und vorzugsweise mehrere, insbesondere gleichmäßig verteilte lokale Vertiefungen in der konusförmigen Wand der Ringvertiefung und/oder in einer wahlweise vorhandenen ringförmigen Bodenfläche der Ringvertiefung vorgesehen ist bzw. sind.

Durch das Vorsehen von Verdrehsicherungsmerkmalen in Form einer lokalen Vertiefung oder mehreren gleichmäßig verteilten Vertiefungen in der konusförmigen Wand der Ringvertiefung und/oder in einer rohrförmigen Bodenfläche der Ringvertiefung wird verhindert, insbesondere bei eher dickeren Blechen, dass die Verdrehsicherungsmerkmale bei der Anbringung des Elements an das Blechteil einen Widerstand darstellen, der für die Einformung des Blechteils oder die Umformung des Nietabschnitts erst überwunden werden muss. Ferner führen solche Verdrehsicherungsvertiefungen dazu, dass keine unerwünschte Verformung des Blechteils eintritt, was insbesondere bei einem Zentrierelement von Bedeutung ist. Darüber hinaus stellen solche Verdrehsicherungsvertiefungen eine ausreichende Verdrehsicherheit sicher und verhindern nicht, dass der Nietbördel so ausgebildet wird, dass er vollständig innerhalb einer auf der Unterseite des Blechteils, d.h. auf der dem Kopfteil des Elements abgewandten Seite des Blechteils vorhandenen Ringvertiefung, aufgenommen werden kann, so dass eine plane Anschraub- bzw. Befestigungsfläche auf der Unterseite des Blechteils vorliegt. Dies gibt wiederum die Gewähr, dass der Führungsabschnitt des Elements, der die Zentrierung bewirkt, auch unmittelbar an die Unterseite des Blechteils, d.h. an der freien Stirnseite des Nietbördels, die auf dem Schaftteil des Elements vorhanden ist, vorgesehen werden kann, so dass eine optimale Zentrierung und Positionierung eines Bauteils sichergestellt wird, das über dem Führungsabschnitt des Elements angeordnet wird.

Ferner kann das erfindungsgemäße Element in einer Ausführung mit verschiedenen Blechdicken in einem relativ breiten Bereich verwendet werden. Beispielsweise können mit nur zwei verschiede Elemente einen Blechdickenbereich von beispielsweise 0,6 bis über 3,5 mm abgedeckt werden, ohne dass der in der Ringvertiefung auf der Unterseite des Blechteils positionierte Nietbördel über die Unterseite des Blechteils vorsteht und Schwierigkeiten bei der Anbringung des weiteren Bauteils verursacht. Beispiels weise könnte bei einer ersten Ausführung mit einem kürzeren Nietabschnitt Blechdicken von 0,6 bis 1,5 mm abgedeckt werden während eine zweite Ausführung mit einem längeren Nietabschnitt fur Blechdicken von beispielsweise 1,5 bis über3,5 mm verwendet wird. Insbesondere gelingt es mit einer etwas kürzeren Nietabschnitt ein Element für Blechdicken im Bereich 1,25 bis über 3,0 mm zu verwenden und dies stellt einen Bereich dar, der für Zentrierbolzen relativ häufig vorkommt. Es soll auch gesagt werden, dass die Erfindung keineswegs auf Elemente mit einem Schaftteildurchmesser von etwa 12mm beschränkt ist, sondern der verwendete Schaftteildurchmesser kann in einem weiten Bereich gewählt werden, bspw. - ohne Einschränkung - im Bereich von 4mm bis 38mm.

Das erfindungsgemäße Element hat außerdem den Vorteil, dass es möglich ist, das so genannte Klemmlochnietverfahren gemäß dem europäischen Patent 0 539 793 B1 durchzuführen und hierbei den angestrebten Würgegriff zwischen dem Blechteil und dem Element zu erzeugen. Mit anderen Worten kann die (teilweise) Flachpressung der konusförmigen Erhebung dazu ausgenutzt werden, um bei der Durchführung des Nietvorgangs die mittlere Öffnung des Blechteils zu verkleinern, so dass der Randbereich der Öffnung in Berührung mit dem Schaftteil des Elements im Bereich oberhalb des Nietabschnitts oder im Bereich des Nietabschnitts gelangt, während dieser radial nach außen durch den Nietvorgang umgelegt und gegebenenfalls durch den Nietvorgang radial gedehnt wird.

Es ist allerdings nicht zwingend erforderlich, das Klemmlochnietverfahren anzuwenden, sondern die Form der konusförmigen Erhebung kann der Form der Ringvertiefung in der Unterseite des Kopfteils des Elements angepasst werden, da bei der Umbördelung des Nietabschnitts die Matrize das Blechmaterial so zwischen sich und dem Kopfteil des Elements verquetschen kann, dass das Blechmaterial nicht nur in die lokale Vertiefung bzw. in die lokalen Vertiefungen einfließt, sondern auch radial nach innen verdrängt wird, wodurch der angestrebte Würgeeingriff ebenfalls zu Stande gebracht werden kann.

Selbst wenn das Befestigungselement eine reine Zentrierfunktion aufweist, ist es günstig, die Verdrehsicherungsmerkmale in Form der lokalen Vertiefung bzw. der lokalen Vertiefungen vorzusehen, da man auf diese Weise eine einfache Möglichkeit schafft, um sicherzugehen, dass das Verfahren der Anbringung des Elements an ein Blechteil mit der erforderlichen Prozesssicherheit abläuft. Man kann nämlich nach Anbringung des Elements an das Blechteil bei entsprechender Abstützung des Blechteils Drehmomente am Element anbringen, in einem Versuch, das Element aus dem Blechteil herauszudrehen bzw. im Blechteil zu lockern. Die Höhe des Drehmoments, bei der eine Lochung eintritt, ist ein Maß dafür, wie fest das Element im Blechteil angebracht ist und kann zur Qualitätssicherung bzw. -überprüfung verwendet werden.

Bei einem Element mit Befestigungsfunktion sind die Verdrehsicherungsmerkmale ohnehin notwendig, um sicherzugehen, dass die Befestigungsfunktion erreicht werden kann, d.h. um den notwendigen Verdrehwiderstand bei Anbringung einer Mutter auf den Schaftteil eines als Bolzenelement realisierten Elements bzw. beim Einschrauben einer Schraube in einen hohlen Schaftteil eines als Mutterelement ausgebildeten Elements zu erzeugen. Bei der Ausbildung des Elements als Mutterelement kann das Gewinde im Kopfteil, im hohlen Schaftteil und/oder in einem Befestigungsabschnitt, der auf der dem Schaffteil abgewandten Seite des Kopfteils vorgesehen ist, vorgesehen werden. Im letzten Fall hat der Befestigungsabschnitt vorzugsweise einen kleineren Außendurchmesser als der Kopfteil des Elements, wodurch eine ringförmige Andrückfläche vorgesehen werden kann, die das Einpressen des Elements in das Blechteil und die Durchführung des Nietvorgangs ermöglicht, ohne dass der Befestigungsabschnitt durch die auftretenden Kräfte verformt wird. Im Falle der Realisierung des Elements als Mutterelement könnte es auch selbststanzend ausgebildet werden.

Bevorzugte Ausführungsformen des erfindungsgemäßen Elements sind den Unteransprüchen 1 bis 11 zu entnehmen.

Das erfindungsgemäße Zusammenbauteil zeichnet sich dadurch aus, dass das Blechteil im Bereich der Ringvertiefung eine ringförmige Erhebung aufweist, die in die Ringvertiefung aufgenommen ist, dass Material des Blechteils in der bzw. in jeder lokalen Vertiefung angeordnet ist und dass auf der der Ringvertiefung abgewandten Seite des Blechteils, dieses eine Ringvertiefung aufweist, in der der zu einem Nietbördel umgebördelte Nietabschnitt angeordnet ist, wobei die dem Kopfteil abgewandte Seite des Nietbördels zumindest im wesentlichen nicht über die Seite des Blechteils im Bereich um den Nietbördel herum vorsteht und vorzugsweise gegenüber diesem geringfügig zurücksteht.

Bevorzugte Ausführungsformen dieses Zusammenbauteils sind den weiteren Unteransprüchen 13 und 14 zu entnehmen.

Schließlich zeichnet sich das erfindungsgemäße Verfahren zur Anbringung eines Elements an ein Blechteil zur Ausbildung eines Zusammenbauteils dadurch aus, dass das Element in ein vorgelochtes Blechteil eingesetzt wird, das vorzugsweise im Bereich der Lochung zu einer Erhebung vorgeformt ist, die zumindest im Wesentlichen der Form der Ringvertiefung angepasst ist oder vorzugsweise eine steilere Konusform als die der konusförmigen Wand aufweist, dass mittels einer Matrize mit einem mittleren Ausschnitt bzw. mit einer mittleren Bohrung, der bzw. die den Schaftteil aufnimmt, und mit einer ringförmigen den Ausschnitt bzw. die Bohrung umgebenden Erhebung das Blechmaterial um den Nietabschnitt herum in die bzw. jede lokale Vertiefung eingeformt wird und der Nietabschnitt bei Ausbildung des Nietbördels in die in der Unterseite des Blechteils ausgebildeten Ringvertiefung eingelegt wird.

Bei dieser Ausführungsform ist die ringförmige Erhebung der Matrize an ihrem freien Ende zumindest im Wesentlichen mit einer Ringkante ausgebildet, die in eine radial außerhalb der Ringkante gelegene, gerundete Umformfläche übergeht, wodurch der Nietabschnitt zu einem Nietbördel umgeformt wird. Dabei weist die Ringkante einen Durchmesser auf, der kleiner ist als der des rohrförmigen Nietabschnitts im Bereich des Ringscheitels am freien Ende des Nietabschnitts damit die Ringkante das Nietbördel beim Nietvorgang radial nach außen umlenken kann.

Der Erfindung wird nachfolgend anhand der Zeichnungen näher erläutert, in denen:
- Fig. 1A-C: drei Ansichten eines erfindungsgemäßen Elements mit reiner Zentrierfunktion zeigen, wobei Fig. 1A das Element in einer perspektivischen Darstellung auf der Unterseite des Kopfteils, Fig. 1B eine teilweise in Längsrichtung geschnittene Darstellung des Elements gemäß Fig. 1A und Fig. 1C eine Draufsicht auf die Unterseite des Kopfteils des Elements gemäß Fig. 1A, 1B zeigt,
- Fig. 2A-B: die Anbringung des erfindungsgemäßen Elements gemäß Fig. 1A-1C an ein Blechteil zeigen, wobei Fig. 2A den Zustand vor Einführung des Elements durch die mittlere Öffnung einer konusförmig Erhebung zeigt und Fig. 2B das Zusammenbauteil in einer teilweise geschnittenen Darstellung,
- Fig. 3A-C: den Fig. 1A-1C entsprechen, jedoch eine abgewandelte Ausführung in Form eines Zentrierelements mit Befestigungsfunktion zeigen,
- Fig. 4A-B: den Fig. 2A-2B entsprechen, jedoch die Anbringung des Bolzenelements gemäß Fig. 3A-3C an ein Blechteil zeigen und
- Fig. 5: die Anschraubsituation darstellt, bei der ein Bauteil an dem Zusammenbauteil angebracht ist, das in Fig. 4B gezeigt ist.

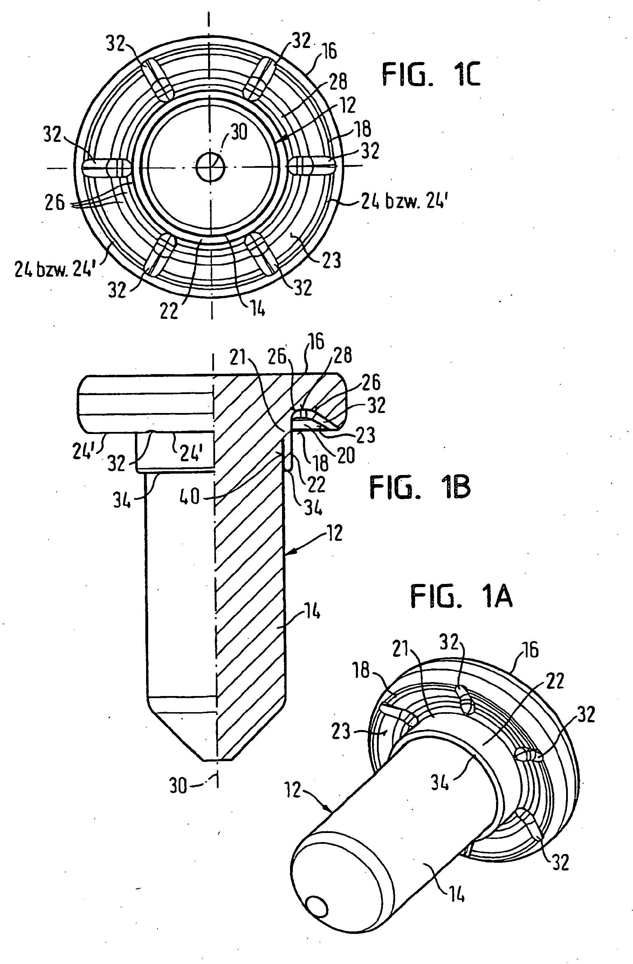

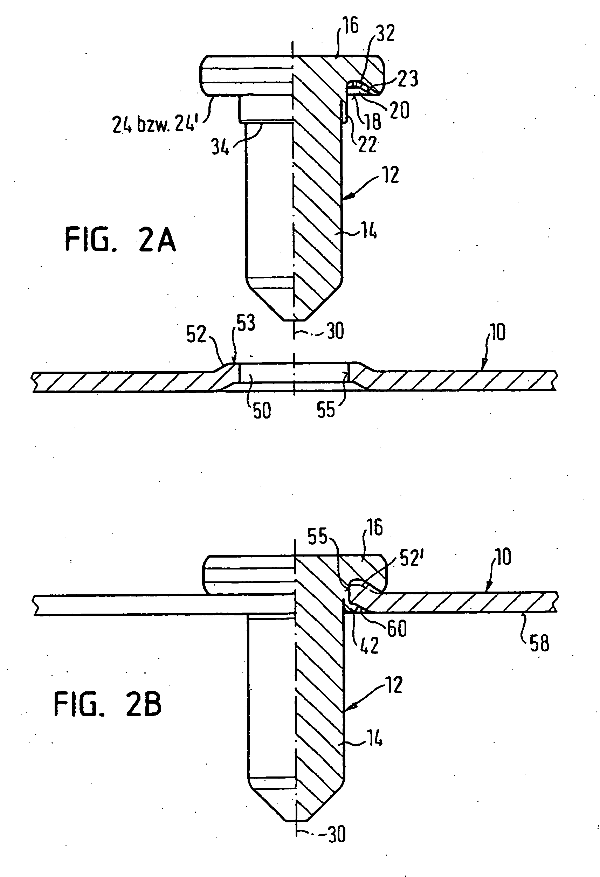

Bezug nehmend auf die Fig. 1A bis 1C und Fig. 2A bis 2B wird ein durch Nieten an ein Blechteil 10 angebrachtes Element 12 in Form eines Zentrierbolzens mit einem Schafteil 14 und einem Kopfteil 16 gezeigt, wobei der Kopfteil auf seiner dem Blechteil 10 zugewandten Seite 18 eine zumindest in etwa ringförmige Ringvertiefung 20 aufweist, die auf der radial inneren Seite in einen Zylinderabschnitt 21 des Kopfteils 16 übergeht, der wiederum in den Schaftteil 14 und einen rohrförmigen Nietabschnitt 22 übergeht, der den Schaftteil 14 im Bereich des Kopfteils 16 bzw. unmittelbar unterhalb des Kopfteils 16 umgibt. Die Ringvertiefung 20 ist innerhalb einer radial außerhalb der Ringvertiefung angeordneter ringförmigen Auflagefläche 24 bzw. eine aus Kreisringsegmenten 24' bestehende Auflagefläche angeordnet und geht auf der radial äußeren Seite über eine zumindest in etwa konusförmige Wand 23 in die Auflagefläche 24 bzw. 24' über. Die konusförmige Wand 23 kann vorteilhafterweise einen eingeschlossenen Konuswinkel in Bezug auf einer waagerechten Ebene wie gezeigt von etwa 33° aufweisen, wobei dieser Winkel ohne weiteres im Bereich von 20° bis 45° gewählt werden kann und auch diese Werte nicht als beschränkend zu betrachten sind.

Radial innerhalb der konusförmigen Wand weist die Ringvertiefung 20 in diesem Beispiel eine zumindest im Halbquerschnitt gekrümmte ringförmige Bodenfläche 26 auf, die in die radial äußere Fläche 28 des Zylinderabschnitts 21 übergeht. In diesem Beispiel schließt die im radialen Halbquerschnitt gekrümmte Bodenfläche 26 einen flachen Abschnitt 28 ein, der im Wesentlichen senkrecht zu der mittleren Längsachse 30 des Elements 12 steht. Es wäre aber denkbar, die flache Bodenfläche wegzulassen oder die radiale Breite des flachen Abschnitts 28 auszudehnen, so dass er direkt oder über einen relativ kleinen Radius in die konusförmige Wand 23 bzw. in den Zylinderabschnitt 21 oberhalb des Nietabschnitts 22 übergeht (nicht gezeigt). Auch könnte die Bodenfläche anders realisiert werden bzw. durch einen relativ scharfen Übergang der konusförmigen Wand in den Zylinderabschnitt 21 oberhalb des Nietabschnitts 22 (wobei die Bezeichnung "oberhalb" für die gezeigte Orientierung des Elements 12 und nicht als geometrische Definition zu verstehen ist).

Mindestens eine lokale Vertiefung 32 und vorzugsweise mehrere, insbesondere gleichmäßig verteilte lokale Vertiefungen 32 ist bzw. sind in der konusförmigen Wand 23 der Ringvertiefung 20 und/oder in der wahlweise vorgesehenen ringförmigen Bodenfläche 26 der Ringvertiefung 20 vorgesehen.

Die bzw. jede lokale Vertiefung 32 weist eine längliche, gerundete Form auf, wobei die Übergänge von den Seitenwänden der jeder lokalen Vertiefung in diesem Beispiel scharfkantig in die Fläche der Ringvertiefung 20 übergehen. Diese Übergänge könnten aber auch gerundet ausgeführt werden.

Die bzw. jede lokale Vertiefung 32 ist im Wesentlichen in einer radialen Ebene angeordnet und ist in diesem Beispiel so lang ausgeführt, dass sie in die ringförmige Auflagefläche hinein erstreckt, wodurch die ringförmigen Auflagefläche 24 in Kreisringsegmente 24' aufgeteilt ist, wie insbesondere an den Stellen 24', 32', 24 auf der linken Seite der Fig. 1B zu erkennen ist. Die Bezeichnung "ringförmigen Auflagefläche" ist daher so zu verstehen, dass sie auch eine aus Kreisringsegmenten zusammengesetzte Auflagefläche abdeckt, die durch solche lokale Vertiefungen unterbrochen ist. Es ist allerdings auch möglich, die lokalen Vertiefungen kürzer zu machen, so dass sie die Auflagefläche 24 nicht erreichen und dies nicht unterteilen.

Genauso, wie sie die ringförmigen Auflagefläche 24 in diesem Beispiel unterteilen, unterteilen die lokalen Vertiefungen die Bodenfläche 26 der Ringvertiefung 23. Wenn diese Bodenfläche 26 als ringförmig bezeichnet wird, so versteht sich, dass diese auch eine Bodenfläche umfasst, die aus durch eine lokale Vertiefung oder mehrere lokale Vertiefungen unterbrochene Bodenfläche umfasst.

In diesem Beispiel sind sechs gleichmäßig verteilte lokale Vertiefungen vorgesehen. Es kann aber durchaus eine andere Anzahl von Vertiefungen vorgesehen werden - von einer lokalen Vertiefung bis zu zwölf lokalen Vertiefungen wäre durchaus denkbar - und auch eine größere Anzahl käme eventuell in Frage, vor allem dann, wenn sie kleiner bzw. schmaler und weniger tief ausgeführt werden.

Wie aus den Zeichnung, insbesondere der Fig. 1B ersichtlich, ist das freie Ende 34 der Wandung des rohrförmigen Nietabschnitts in einer radialen Schnittebene gesehen (wie auf der rechten Seite in Fig. 1B gezeigt) sowohl auf der radial äußeren Seite als auch auf der radial inneren Seite gerundet und weist beispielsweise eine halbkreisförmige oder pfeilspitzartige Form auf, wodurch ein Ringscheitel am unteren Ende des Nietabschnitts genau an der Stell die mit 34 gekennzeichnet ist entsteht.

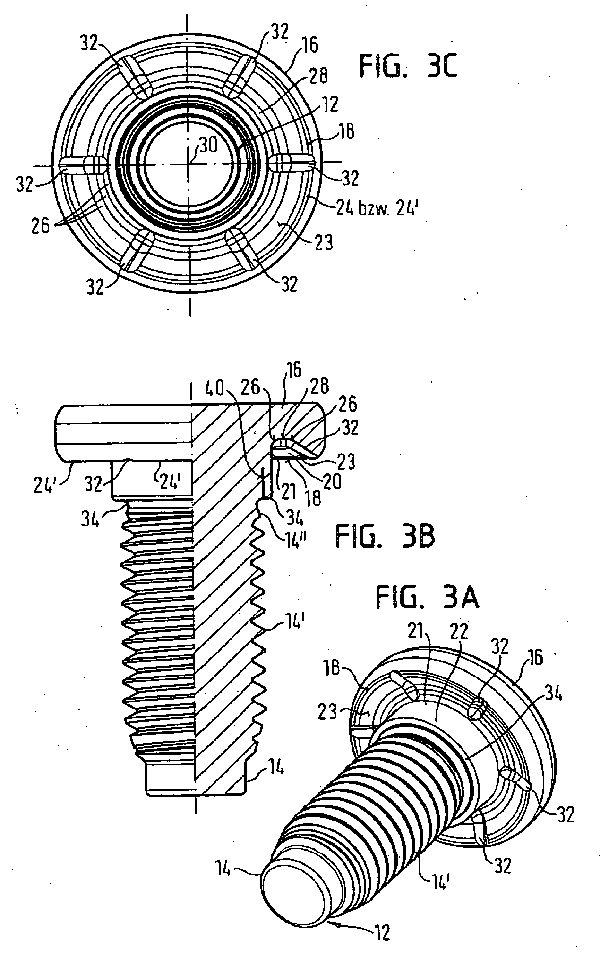

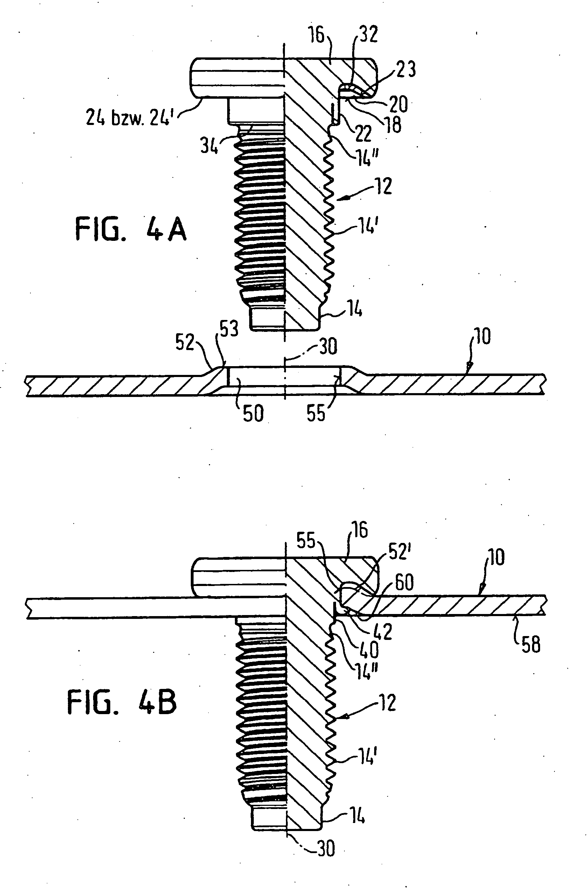

In der Ausführung gemäß Fig. 1A-1C und 2A, 2B ist der Schaftteil 14 als massives oder rohrförmiges Zentrierteil ausgebildet. Anstatt das Element als reines Zentrierelement auszubilden, kann es als Zentrier- und Befestigungselement gemäß den Fig. 3A bis 3C bzw. Fig. 4A und 4B ausgebildet werden. Bei der Beschreibung der Ausführungsform gemäß Fig. 3a bis 3C bzw. Fig. 4A und 4B werden Merkmale, die die gleiche Gestaltung und/oder die gleiche Funktion wie in der Ausführung gemäß Fig. 1A bis 1C und Fig. 2A und 2B aufweisen, mit den gleichen Bezugszeichen versehen und es versteht sich, dass die gleiche Beschreibung auch für die entsprechenden Merkmale bzw. Funktionen gilt, es sei denn, es wird etwas Gegenteiliges gesagt. Dies gilt auch umgekehrt, d.h. die Beschreibung der Fig. 3A bis 3C und der Fig. 4A und 4B gilt auch für die Ausführungsform gemäß Fig. 1A bis 1C und Fig. 2A und 2B es sei denn daß etwas gegenteiliges gesagt wird. Der Kürze halber wird daher die Beschreibung nicht unnötig wiederholt. Bei der Ausführung gemäß Fig. 3A bis 3C und 4A und 4B ist der Schaftteil 14 mit einem Gewinde 14' versehen.

Das Gewinde 14' weist im Anschluss an den Bereich des freien Endes des rohrförmigen Nietabschnitts einen Gewindeauslauf 14" auf, der in einen zylindrischen Abschnitt 40 übergeht mit einem Durchmesser, der gegenüber dem Außendurchmesser des Gewindes gleich groß oder größer ist. Dieser zylindrische Abschnitt 40, der den eigentlichen Zentrierabschnitt bildet, kommt im Wesentlichen erst dann zum Vorschein, wenn das Element 12 an ein Blechteil 10 angebracht ist, wie in Fig. 4B gezeigt. Bei der Ausführung gemäß Fig. 1A bis 1C bzw. Fig. 2A, 2B bildet entweder der gesamte Schaftteil 14 unterhalb des umgelegten Nietabschnitts, d.h. des Nietbördels 42 den Zentrierabschnitt 40 oder aber nur der Teil unmittelbar unterhalb des Nietbördels 42, wobei der restliche Teil gegebenenfalls abgesetzt sein kann, d.h. mit einem kleineren Durchmesser zum vorzentrierten ausgeführt werden kann.

Es bestehen verschiedene Möglichkeiten, die Elemente gemäß Fig. 1A bis 1C bzw. 3A bis 3C abzuwandeln. Beispielsweise kann der Kopfteil auf der dem Schaftteil entgegengesetzten Seite einen Funktionsabschnitt, beispielsweise in Form eines Außengewindes, eines Innengewindes, eines weiteren Schaftteils mit Clipaufnahme oder eines Führungsteils aufweisen. Als weitere Alternative könnte der Schaftteil 14 höher ausgeführt werden und entweder als Führung für einen Stift oder eine Welle dienen oder mit einem Innengewinde ausgeführt werden.

Das Verfahren zur Anbringung des Elements 12 der Fig. 1A bis 1C an ein Blechteil 10 wird nunmehr anhand der Fig. 2A und 2B beschrieben. Es wird darauf hingewiesen, dass die gleiche Beschreibung auch für die Anbringung des Elements 12 gemäß den Fig. 3A bis 3C an ein Blechteil 10 gemäß Fig. 4A und 4B gilt, was durch Anwendung der gleichen Bezugszeichen zum Ausdruck kommt. Die Beschreibung des Verfahrens gemäß Fig. 2A und 2B wird daher für die Fig. 4A und 4B nicht wiederholt.

Wie in Fig. 2A (4A) gezeigt wird das Element 12 in ein vorgelochtes Blechteil 10 eingesetzt, das im Bereich der Lochung 50 zu einer Erhebung 52 vorgeformt ist, die zumindest im Wesentlichen der Form der Ringvertiefung 23 angepasst ist. In diesem Beispiel ist die Erhebung 52 des Blechteils oben abgeflacht 53 und das Loch 50 ist nachträglich gestanzt worden wodurch die Seitenwand 53 des Lochs parallel zur Längsachse 30 verlauft. Die vorgegebene Abflachung ist aber nicht zwingend erforderlich und die konusförmige Erhebung 52 könnte ohne weiteres ohne Abflachung 53 ausgebildet werden. Die Stanzung des Loches 50 könnte auch gleichzeitig mit dem Pressvorgang zur Ausbildung des Loches 50 kombiniert werden, wodurch die Lochwand 55 konusförmig verlaufen und in Fig. 2A nach oben divergieren wurde. Als weitere Alternative kann die Erhebung eine steilere Konusform als die der konusförmigen Wand 24 der Ringvertiefung 23 aufweisen.

Die Anbringung des Elements an ein Blechteil erfolgt in an sich bekannter Weise mittels einer Matrize in einer Presse oder C-Gestell statt. Dabei wird beispielsweise auf den Kopfteil des Elements gedrückt wahrend das Blechteil auf die Matrize abgestützt wird. Mittels der Matrize (nicht gezeigt), die einen mittleren Ausschnitt bzw. eine mittlere Bohrung, der bzw. die den Schaftteil aufnimmt, und eine ringförmige den Ausschnitt bzw. die Bohrung umgebende Erhebung aufweist, wird das Blechmaterial um den Nietabschnitt 22 herum in die bzw. jede lokale Vertiefung 32 eingeformt. Der Nietabschnitt 22 wird bei der Ausbildung des Nietbördels 42 in die in der Unterseite des Blechteils 10 ausgebildete Ringvertiefung 54 eingelegt.

Zu diesem Zweck ist die ringförmige Erhebung der Matrize an ihrem freien Ende vorzugsweise mit einer Ringkante ausgebildet, die in eine radial außerhalb der Ringkante gelegene gerundete Umformfläche übergeht. Der Durchmesser der Ringkante ist etwas kleiner gewählt als der Durchmesser des Ringscheitels am freien Ende des Nietabschnitts 22, wodurch während des Nietvorgangs der Nietabschnitt 22 durch die Ringkante und die gerundete Umformfläche radial nach außen umgelenkt und zu dem Nietbördel 42 umgeformt wird. Dabei wird das Blechmaterial durch die zwischen dem Kopfteil 16 des Elements und der Matrize ausgeübten Kräfte von dem sich ausbildenden Nietbördel und dem Bereich der Matrize radial außerhalb des Nietbördels so verquetscht, dass das Blechmaterial in die lokalen Vertiefung(en) 32 fließt und dort Erhebungen im Blechmaterial bildet, die eine die Verdrehsicherung schaffende Verzahnung zwischen dem Element und dem Blechteil 10 bilden. Durch die Umbördelung des Nietabschnitts wird das Blechmaterial außerdem in eine zwischen der Ringvertiefung 20 und dem Nietbördel 42 ausgebildete radiale Nut 56 eingeklemmt, welche das Element in axialer Richtung im Blechteil sichert. Durch die Quetschkräfte (und die gleichzeitig eintretende Dehnung des Nietabschnitts) wird das Blechmaterial außerdem fest gegen den Schaftteil 14 des Elements im Bereich oberhalb des Nietbördels 42 gepresst, wodurch eine hohe Lochlaibung entsteht, die eine feste Positionierung des Elements und einen erhöhten Verdrehsicherungswiderstand erzeugt. Außerdem wird das Blechmaterial in Kompression gesetzt, so dass im dynamischen Betrieb keine Ermüdungsrisse zu befürchten sind. Diese Wirkung kann noch gesteigert werden, wenn die konusförmige Blechanstellung teilweise flach gepresst wird, d.h. wenn das Klemmlochnietverfahren gemäß dem eingangs genannten EP-A-0 539 793 angewendet wird.

Das Ergebnis des Verfahrens ist somit ein Zusammenbauteil bestehend aus dem Blechteil 10 und dem daran angebrachten Element 12, wobei das Blechteil 10 im Bereich der Ringvertiefung 20 eine ringförmige Erhebung 52' aufweist, die in die Ringvertiefung 20 formangepasst aufgenommen ist und das Material des Blechteils in der bzw. in jeder lokalen Vertiefung 32 angeordnet ist. Ferner liegt auf der der Ringvertiefung 20 abgewandten Seite 58 des Blechteils 10 eine Ringvertiefung 60 vor, in der der zu einem Nietbördel 42 umgebördelte Nietabschnitt 22 angeordnet ist. Die dem Kopfteil 16 abgewandte Seite des Nietbördels 42 steht zumindest im Wesentlichen nicht über die Seite 58 des Blechteils im Bereich um den Nietbördel herum vor und ist vorzugsweise gegenüber diesem geringfügig zurückversetzt, beispielsweise um 0,02 mm.

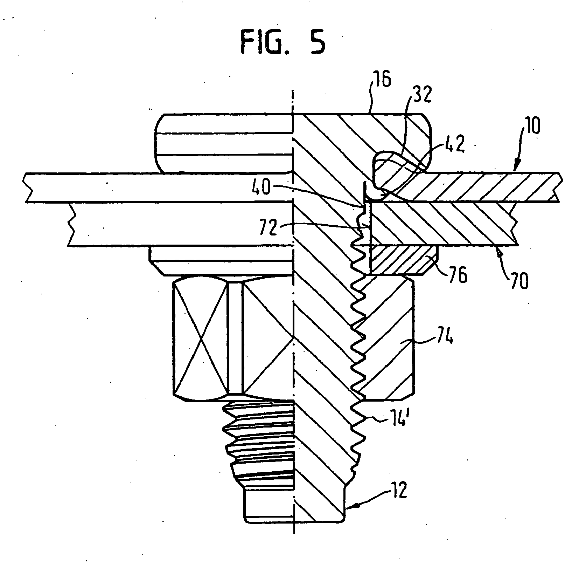

Eine Verwendung des Zusammenbauteils der Fig. 4B mit einem weiteren Bauteil 70 ist in Fig. 5 gezeigt. Das Bauteil weist ein Loch 72 auf.

Der Innendurchmesser des Loches 72 ist zumindest im Wesentlichen mit dem Außendurchmesser des Schaftteils 14 im Bereich des Nietbördels 42, d.h. des Zentrierabschnitts 40 identisch und das Bauteil wird durch diesen Bereich des Schaftteils zentriert.

Das Bauteil 70 ist an dem Blechteil 10 mittels eines an den Schaftteil 14 des Elements angebrachten Befestigungselements 74 gehalten ist, beispielsweise bei Ausbildung des Schaftteils mit einem Außengewinde 14' durch eine auf das Gewinde 14' aufgeschraubte Mutter 74 gegebenenfalls unter Zwischenschaltung einer Scheibe 76. Alternativ hierzu kann der Schaftteil 14 als ein rohrförmiges Teil mit Innengewinde ausgebildet werden (nicht gezeigt) und das Bauteil 70 kann dann durch eine in das Innengewinde eingeschraubte Schraube befestigt werden.

Der Vollständigkeit halber soll darauf hingewiesen werden, dass das erfindungsgemäße Element nicht zwangsläufig eine Zentrierfunktion erfüllen muss, sondern es kann eine reine Befestigungsfunktion haben und muss daher nicht ein Zentrierelement bzw. Zentrierbolzen sein.

Bei allen Ausführungsformen können als Beispiel für den Werkstoff des Elements alle Materialien genannt werden, die im Rahmen der Kaltverformung die Festigungswerte der Klasse 8 gemäß ISO-Standard oder höher erreichen, beispielsweise eine 35B2-Legierung. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Elemente benutzt werden, z.B. AlMg5. Auch kommen Elemente aus höherfesten Magnesiumlegierungen wie bspw. AM50 in Frage.

## Patentansprüche

1. Ein durch Nieten an ein Blechteil (10) anbringbares Element (12), insbesondere ein Element in Form eines Zentrierbolzens, mit einem Schafteil (14) und einem Kopfteil (16), wobei der Kopfteil auf seiner dem Blechteil zugewandten Seite (18) eine zumindest in etwa ringförmige Ringvertiefung (20) aufweist, die radial innerhalb einer ringförmigen Auflagefläche (24 bzw. 24') angeordnet ist und auf der radial äußeren Seite über eine zumindest in etwa konusförmige Wand (23) in diese ringförmige Auflagefläche übergeht, wobei der Schaftteil von einem rohrförmigen Nietabschnitt (22) umgeben ist,
**dadurch gekennzeichnet,**
**dass** die Ringvertiefung (20) auf der radial inneren Seite in einen Zylinderabschnitt (21) des Kopfteils (16) übergeht, der wiederum in den Schaftteil (14) und den Nietabschnitt (22) übergeht, und
**dass** mindestens eine lokale Vertiefung (32) und vorzugsweise mehrere, insbesondere gleichmäßig verteilte lokale Vertiefungen (32) in der konusförmigen Wand (23) der Ringvertiefung und/oder in einer wahlweise vorhandenen ringförmigen Bodenfläche (26) der Ringvertiefung vorgesehen ist bzw. sind.

2. Element nach Anspruch 1,
**dadurch gekennzeichnet,**
**dass** der Bereich des Schaftteils (14) radial innerhalb des rohrförmigen Nietabschnitts (22) einen Zentrierabschnitt (40) bildet oder zu einem Zentrierabschnitt des Schaftteils (14) gehört.

3. Element nach Anspruch 1 oder 2,
**dadurch gekennzeichnet,**
**dass** die Ringvertiefung (20) radial innerhalb der konusförmigen Wand (23) entweder eine zumindest im wesentlichen senkrecht zur Längsachse des Elements stehende oder im Querschnitt gekrümmte ringförmige Bodenfläche (6, 28) aufweist, die in die radial äußere Fläche des Zylinderabschnitts (21) übergeht.

4. Element nach einem der vorhergehenden Ansprüche,
**dadurch gekennzeichnet,**
**dass** die bzw. jede lokale Vertiefung (32) eine längliche, gerundete Form aufweist, wobei die Übergänge von den Seitenwänden der Vertiefung(en) (32) in die Fläche der Ringvertiefung (20) entweder scharfkantig oder gerundet ausgebildet sind.

5. Element nach einem der vorhergehenden Ansprüche,
**dadurch gekennzeichnet,**
**dass** die bzw. jede lokale Vertiefung (32) zumindest im Wesentlichen in einer radialen Ebene angeordnet ist.

6. Element nach einem der vorhergehenden Ansprüche,
**dadurch gekennzeichnet,**
**dass** der rohrförmige Nietabschnitt (22) durch einen radialen Spalt vom Schaftteil (14) bzw. vom Zentrierabschnitt (40) beabstandet ist oder vorzugsweise an diesem auf der radial inneren Seite des rohrförmigen Nietabschnitts (22) anliegt.

7. Element nach einem der vorhergehenden Ansprüche,
**dadurch gekennzeichnet,**
**dass** das freie Ende (34) der Wandung des rohrförmigen Nietabschnitts (22) in einer axialen Schnittebene gesehen sowohl auf der radial äußeren Seite als auch auf der radial inneren Seite gerundet ist und beispielsweise eine halbkreisförmige oder pfeilspitzartige Form aufweist.

8. Element nach einem der vorhergehenden Ansprüche,
**dadurch gekennzeichnet,**
**dass** der Schaftteil (14) als massives oder rohrförmiges Zentrierteil ausgebildet ist.

9. Element nach einem der vorhergehenden Ansprüche,
**dadurchgekennzeichnet**,
dass der Schaftteil (14) ein Gewinde (14') aufweist.

10. Element nach Anspruch 9,
**dadurch gekennzeichnet,**
**dass** das Gewinde (14') im Anschluss an den Bereich des freien Endes des rohrförmigen Nietabschnitts einen Gewindeauslauf (14") aufweist, der in den zylindrischen Abschnitt (40) übergeht mit einem Durchmesser, der gegenüber dem Außendurchmesser des Gewindes (14') gleich groß oder größer ist.

11. Element nach einem der vorhergehenden Ansprüche,
**dadurch gekennzeichnet,**
**dass** der Kopfteil (16) auf der dem Schaftteil (14) entgegengesetzten Seite einen Funktionsabschnitt, beispielsweise in Form eines Au-βengewindes, eines Innengewindes, eines weiteren Schaftteils mit Clipaufnahme oder eines Führungs- oder Zentrierteils aufweist.

12. Zusammenbauteil bestehend aus einem Blechteil (10) und einem daran angebrachten Element (12) nach einem oder mehreren der vorhergehenden Ansprüche,
**dadurch gekennzeichnet,**
**dass** das Blechteil (10) im Bereich der Ringvertiefung (20) eine ringförmige Erhebung (52) aufweist, die in die Ringvertiefung (20) aufgenommen ist, dass Material des Blechteils in der bzw. in jeder lokalen Vertiefung (32) angeordnet ist und dass auf der der Ringvertiefung (20) abgewandten Seite (58) des Blechteils (10), dieses eine Ringvertiefung (60) aufweist, in der der zu einem Nietbördel (42) umgebördelte Nietabschnitt (22) angeordnet ist, wobei die dem Kopfteil (16) abgewandte Seite des Nietbördels zumindest im wesentlichen nicht über die Seite (58) des Blechteils im Bereich um den Nietbördel (42) herum vorsteht und vorzugsweise gegenüber diesem geringfügig zurücksteht.

13. Zusammenbauteil nach Anspruch 12 in Kombination mit einem Bauteil (70), das ein Loch aufweist (72), das über dem Schaftteil (14) des Elements (12) angeordnet ist und an dem Blechteil (10) anliegt,
**dadurch gekennzeichnet,**
**dass** der Innendurchmesser des Loches (72) zumindest im wesentlichen mit dem Außendurchmesser des Schaftteils im Bereich des Zeritrierabschnitts(40) bzw. des Nietbördels (42) identisch ist und das Bauteil durch diesen Bereich des Schaftteils zentriert ist.

14. Zusammenbauteil nach Anspruch 13,
**dadurch gekennzeichnet,**
**dass** das Bauteil (70) an dem Blechteil (10) mittels eines an den Schaftteil (14) des Elements angebrachten Befestigungselements (74) gehalten ist, beispielsweise bei Ausbildung des Schaftteils mit einem Außengewinde (14') durch eine auf das Gewinde aufgeschraubte Mutter oder bei Ausbildung des Schaftteils als ein rohrförmiges Teil mit Innengewinde durch eine in das Innengewinde eingeschraubte Schraube.

15. Verfahren zur Anbringung eines Elements nach einem der Ansprüche 1 bis 11 an ein Blechteil (10) zur Ausbildung eines Zusammenbauteils nach einem der Ansprüche 12 bis 14,
**dadurch gekennzeichnet,**
**dass** das Element in ein vorgelochtes Blechteil (10) eingesetzt wird, das vorzugsweise im Bereich der Lochung zu einer Erhebung (52) vorgeformt ist, die zumindest im Wesentlichen der Form der Ringvertiefung (20) angepasst ist oder vorzugsweise eine steilere Konusform als die der konusförmigen Wand (23) aufweist, dass mittels einer Matrize mit einem mittleren Ausschnitt bzw. mit einer mittleren Bohrung, der bzw. die den Schaftteil aufnimmt, und mit einer ringförmigen den mittleren Ausschnitt bzw. die Bohrung umgebenden Erhebung das Blechmaterial um den Nietabschnitt (22) herum in die bzw. jede lokale Vertiefung (32) eingeformt wird und der Nietabschnitt (22) bei Ausbildung des Nietbördels (42) in die in der Unterseite des Blechteils ausgebildeten Ringvertiefung (20) eingelegt bzw. gedrückt wird.

16. Verfahren nach Anspruch 15,
**dadurch gekennzeichnet**
**dass** die ringförmige Erhebung der Matrize an ihrem freien Ende zumindest im Wesentlichen mit einer Ringkante ausgebildet ist, die in eine radial außerhalb der Ringkante gelegene gerundete Umformfläche übergeht, wodurch der Nietabschnitt (22) zu einem Nietbördel (42) umgeformt wird.

## Claims

1. An element (12) attachable to a sheet metal part (10) by riveting, in particular an element in the form of a centering bolt, having a shaft part (14) and a head part (16), wherein the head part has at its side (18) confronting the sheet metal part an at least approximately ring-like ring recess (20) which is disposed radially inside a ring-like contact surface (24, 24' respectively) and which merges at the radially outer side via an at least approximately conical wall (23) into this ring-like contact surface, with the shaft part being surrounded by a tubular rivet section (22),
**characterized in that**
the ring recess (20) merges at the radially inner side into a cylinder section (21) of the head part (16) which in turn merges into the shaft part (14) and into the rivet section (22) and **in that** at least one local recess (32) and preferably a plurality of in particular uniformly distributed local recesses (32) is or are provided in the conical wall (23) of the ring recess and/or in an optionally present ring-like base surface (26) of the ring recess.

2. An element in accordance with claim 1,
**characterized in that**
the region of the shaft part (14) radially within the tubular rivet section (22) forms a centering section (40) or belongs to a centering section of the shaft part (14).

3. An element in accordance with claim 1 or claim 2,
**characterized in that**
the ring recess (20) has, radially inside the conical wall (23), a ring-like base surface (6, 28) which stands at least substantially perpendicular to the longitudinal axis of the element or which is curved in cross section which merges into the radially outer surface of the cylinder section (21).

4. An element in accordance with any one of the preceding claims,
**characterized in that**
the or each local recess (32) has an elongate rounded shape, with the transitions from the side walls of the recess(es) (32) into the surface of the ring recess (20) being either sharp-edged or rounded.

5. An element in accordance with any one of the preceding claims,
**characterized in that**
the or each local recess (32) is disposed at least substantially in a radial plane.

6. An element in accordance with any one of the preceding claims,
**characterized in that**
the tubular rivet section (22) is spaced by a radial gap from the shaft part (14) or from the centering section (40) or preferably contacts the latter at the radially inner side of the tubular rivet section (22).

7. An element in accordance with any one of the preceding claims,
**characterized in that**
the free end (34) of the wall of the tubular rivet section (22) when viewed in an axial section plane is rounded both at the radially outer side and also at the radially inner side and has for example a semi-circular shape or a shape resembling an arrow tip.

8. An element in accordance with any one of the preceding claims,
**characterized in that**
the shaft part (14) is formed as a solid or tubular centering part.

9. An element in accordance with any one of the preceding claims,
**characterized in that**
the shaft part (14) has a thread (14').

10. An element in accordance with claim 9,
**characterized in that**
the thread (14') has a thread run-out (14") adjacent to the region of the free end of the tubular rivet section, with the thread run-out merging into a cylindrical section (40) having a diameter which is of the same size as or larger than the outer diameter of the thread (14').

11. An element in accordance with any one of the preceding claims,
**characterized in that**
the head part (16) has a functional section at the side opposite to the shaft part (14), for example in the form of an outer thread, of an inner thread, of a further shaft part with a clip mount or of a guide or centering part.

12. A component assembly comprising a sheet metal part (10) and an element (12) in accordance with one or more of the preceding claims attached thereto,
**characterized in that**
the sheet metal part (10) has a ring-like raised formation (52) in the region of the ring recess (20) which is received in the ring recess (20); **in that** material of the sheet metal part is disposed in the or in each local recess (32) and **in that** the sheet metal part (10) has, at the side (58) remote from the ring recess (20), a ring recess (60) into which the rivet section (22) which has been turned over into a rivet bead (42) is disposed, with the side of the rivet bead remote from the head part (16) at least substantially not projecting beyond the side (58) of the sheet metal part in the region around the rivet bead (42) and preferably being set back slightly relative to the latter.

13. A component assembly in accordance with claim 12 in combination with a component (70) having a hole (72) which is disposed over the shaft part (14) of the element (12) and contacts the sheet metal part (10),
**characterized in that**
the inner diameter of the hole (72) is at least substantially identical to the outer diameter of the shaft part in the region of the centering section (40), i.e. of the rivet bead (42), and the component is centered by this region of the shaft part.

14. A component assembly in accordance with claim 13,
**characterized in that**
the component (70) is held at the sheet metal part (10) by means of a fastener element (74) attached to the shaft part (14) of the element, for example on forming the shaft part with an external thread, (14') by a nut screwed onto the thread or, on formation of the shaft part as a tubular part with an internal thread, by a screw screwed into the internal thread.

15. A method for the attachment of an element in accordance with any one of the claims 1 to 11 to a sheet metal part (10) for the formation of a component assembly in accordance with any one of the claims 12 to 14,
**characterized in that**
the element is inserted into a pre-holed sheet metal part (10) which is preferably pre-shaped in the region of the hole to form a raised portion (52) which is matched at least substantially to the shape of the ring recess (20), or preferably has a steeper conical shape than the conical wall (23); **in that** the sheet metal material around the rivet section (22) is formed by means of a die button having a central recess or a central bore which receives the shaft part and a ring-like raised portion which surrounds the central recess or the bore, into the or each local recess (32) and the rivet section (22) is laid or pressed into the ring recess (20) formed in the underside of the sheet metal part during formation of the rivet bead (42).

16. A method in accordance with claim 15,
**characterized in that**
the ring-like raised portion of the die button is formed at its free end at least substantially with a ring edge which merges into a rounded shaping surface disposed radially outside of the ring edge, whereby the rivet section (22) is formed into a rivet bead (42).

## Revendications

1. Elément (12) susceptible d'être monté par rivetage sur une pièce en tôle (10), en particulier élément en forme d'un boulon de centrage, comportant une partie de tige (14) et une partie de tête (16), la partie de tête présentant sur son côté (18) tourné de la partie de tôle (14) un renfoncement annulaire (20) de forme sensiblement annulaire qui est agencé radialement à l'intérieur d'une surface d'appui (24 et 24') de forme annulaire et qui se transforme sur le côté radialement extérieur via une paroi au moins approximativement conique en cette surface d'appui annulaire, la partie de tige étant entourée par un tronçon de rivet (22) de forme tubulaire,
**caractérisé en ce que**
le renfoncement annulaire (20) se transforme sur le côté radialement intérieur en un tronçon cylindrique (21) de la partie de tête (16) qui se transforme à son tour en la partie de tige (14) et en le tronçon de rivet (22), et **en ce qu'**il est prévu au moins un renfoncement local (32) et de préférence plusieurs renfoncements locaux (32) répartis de manière régulière dans la paroi (23) conique du renfoncement annulaire et/ou dans une surface de fond (25) de forme annulaire facultativement présente, du renfoncement annulaire.

2. Elément selon la revendication 1,
**caractérisé en ce que**
la zone de la partie de tige (14) forme radialement à l'intérieur du tronçon de rivet (22) de forme tubulaire un tronçon de centrage (40) ou appartient à un tronçon de centrage de la partie de tige (14).

3. Elément selon la revendication 1 ou 2,
**caractérisé en ce que**
le renfoncement annulaire (20) présente radialement à l'intérieur de la paroi (23) conique une surface de fond (6, 28) de forme annulaire soit au moins sensiblement perpendiculaire à l'axe longitudinal de l'élément soit de section transversale incurvée, laquelle se transforme en la surface radialement extérieure du tronçon cylindrique (21).

4. Elément selon l'une quelconque des revendications précédentes,
**caractérisé en ce que**
le ou chaque renfoncement local (32) présente une forme arrondie et allongée, les passages depuis les parois latérales du/des renfoncement(s) (32) dans la surface du renfoncement annulaire (20) étant réalisés soit à arête vive soit arrondis.

5. Elément selon l'une quelconque des revendications précédentes,
**caractérisé en ce que**
le ou chaque renfoncement local (32) est agencé au moins sensiblement dans un plan radial.

6. Elément selon l'une quelconque des revendications précédentes,
**caractérisé en ce que**
le tronçon de rivet (22) de forme tubulaire est espacé par une fente radiale de la partie de tige (14) ou du tronçon de centrage (40) et est de préférence en appui sur celui-ci sur le côté radialement intérieur du tronçon de rivet (22) de forme tubulaire.

7. Elément selon l'une quelconque des revendications précédentes,
**caractérisé en ce que**
l'extrémité libre (34) de la paroi du tronçon de rivet (22) de forme tubulaire, vue dans un plan de coupe axial, est arrondie tant sur le côté radialement extérieur que sur le côté radialement intérieur et présente par exemple une forme de demi-cercle ou une forme de pointe de flèche.

8. Elément selon l'une quelconque des revendications précédentes,
**caractérisé en ce que**
la partie de tige (14) est réalisée sous forme de partie de centrage massive ou de forme tubulaire.

9. Elément selon l'une quelconque des revendications précédentes,
**caractérisé en ce que**
la partie de tige (14) présente un filetage (14').

10. Elément selon la revendication 9,
**caractérisé en ce que**
le filetage (14') présente en raccordement à la zone de l'extrémité libre du tronçon de rivet de forme tubulaire une sortie de filetage (14") qui se transforme en le tronçon cylindrique (40) avec un diamètre qui est aussi grand ou plus grand que le diamètre extérieur du filetage (14').

11. Elément selon l'une quelconque des revendications précédentes,
**caractérisé en ce que**
la partie de tête (16) sur le côté opposé à la partie de tige(14) présente un tronçon fonctionnel, par exemple sous la forme d'un filetage, d'un taraudage, d'une autre partie de tige avec logement de clip ou d'une partie de guidage ou de centrage.

12. Composant d'assemblage constitué par une pièce de tôle (10) et un élément (12) monté sur celle-ci selon une ou plusieurs des revendications précédentes,
**caractérisé en ce que**
la pièce de tôle (10) présente dans la zone du renfoncement annulaire (20) un relief (52) de forme annulaire qui est reçu dans le renfoncement annulaire (20), **en ce que** du matériau de la partie de tôle est agencé dans le ou chaque renfoncement local (32) et **en ce que** sur le côté (58) de la partie de tôle (10), détourné du renfoncement annulaire (20), celle-ci présente un renfoncement annulaire (60) dans lequel est agencé le tronçon de rivet (22) rabattu pour former un rebord de rivet (42), le côté du rebord de rivet, détourné de la partie de tête (16), ne faisant sensiblement pas saillie au-delà du côté (58) de la pièce de tôle dans la zone autour du rebord de rivet (42) et est de préférence légèrement en retrait par rapport à celui-ci.

13. Composant d'assemblage selon la revendication 12 en combinaison avec un composant (70) qui présente un trou (82) qui est agencé au-dessus de la partie de tige (14) de l'élément (12) et qui est en appui sur la pièce de tôle (10),
**caractérisé en ce que**
le diamètre intérieur du trou (72) est au moins sensiblement identique au diamètre extérieur de la partie de tige dans la zone du tronçon de centrage (40) ou du rebord de rivet (42) et **en ce que** le composant est centré par cette zone de la partie de tige.

14. Composant d'assemblage selon la revendication 13,
**caractérisé en ce que**
le composant (70) est retenu sur la pièce de tôle (10) au moyen d'un élément de fixation (74) monté sur la partie de tige (14) de l'élément, par exemple en réalisant la partie de tige avec un filetage (14') par un écrou vissé sur le filetage ou en réalisant la partie de tige sous forme de pièce de forme tubulaire avec taraudage par une vis vissée dans le taraudage.

15. Procédé de montage d'un élément selon l'une des revendications 1 à 11 sur une pièce de tôle (10) pour réaliser un composant d'assemblage selon l'une des revendications 12 à 14,
**caractérisé en ce que**
l'élément est mis en place dans une pièce de tôle (10) prépercée qui est de préférence préformée dans la zone du perçage pour réaliser un relief (52) qui est adapté au moins sensiblement à la forme du renfoncement annulaire (20) et qui présente de préférence une forme conique plus raide que la paroi conique (23), **en ce qu'**au moyen d'une matrice avec une découpe médiane ou un perçage médian, qui reçoit la partie de tige, et avec un relief de forme annulaire entourant la découpe médiane ou le perçage médian, le matériau de tôle est façonné dans le ou chaque renfoncement local (32) autour du tronçon de rivet (22), et le tronçon de rivet (22) est inséré et pressé dans le renfoncement annulaire (20) réalisé dans la face inférieure de la pièce de tôle en formant le rebord de rivet (42).

16. Procédé selon la revendication 15,
**caractérisé en ce que**
le relief de forme annulaire de la matrice est réalisé à son extrémité libre au moins sensiblement avec une arête annulaire qui se transforme en une surface de façonnage arrondie située radialement à l'extérieur de l'arête annulaire, grâce à quoi le tronçon de rivet (22) est façonné en un rebord de rivet (42).
